# FASCICULE DE BREVET EUROPEEN

(11) **EP 0 771 945 B1**
(45) Date de publication et mention de la délivrance du brevet: **10.01.2001**
(21) Numéro de dépôt: 96402300.6
(22) Date de dépôt: 30.10.1996
(51) Int. Cl.: F02K 1/70

(54) **Inverseur de poussée de turboréacteur à double flux muni de portes secondaires**
Schubumkehrvorrichtung mit Sekundärklappen für ein Bläsertriebwerk
Thrust reverser with secondary flaps for a turbofan engine

(30) Priorité: 02.11.1995 FR 9512887
(43) Date de publication de la demande: 07.05.1997
(73) Titulaire: HISPANO-SUIZA AEROSTRUCTURES, 76700 Gonfreville l'Orcher (FR)
(72) Inventeur: Masson, Bertrand Henri Edouard François, 76620 Le Havre (FR)
(74) Mandataire: Berrou, Paul

(56) Documents cités:
- FR-A- 2 146 109
- GB-A- 1 177 864
- GB-A- 1 605 235
- US-A- 3 605 411
- US-A- 3 739 582

## Description

La présente invention concerne un inverseur de poussée à portes pour turboréacteur à double flux.

Le turboréacteur est équipé d'un conduit en arrière de la soufflante dont le but est de canaliser le flux secondaire dit froid. Ce conduit est constitué d'une paroi interne qui entoure la structure du moteur proprement dite en arrière de la soufflante et d'une paroi externe dont la partie amont vient en continuité du carter moteur qui entoure la soufflante. Cette paroi externe peut canaliser à la fois le flux secondaire et le flux primaire dans sa partie aval, ceci en arrière de l'éjection du flux primaire, dit chaud, dans le cas de nacelle à flux mélangés ou à flux confluents par exemple mais dans d'autres cas la paroi externe ne canalise que le flux secondaire pour des applications à nacelle dite à flux séparés.

Une paroi peut également caréner l'extérieur du moteur, c'est à dire l'extérieur du carter qui entoure la soufflante et l'extérieur de la paroi extérieure du conduit décrit ci-dessus, ceci pour minimiser la traînée de l'ensemble propulsif. Ceci est notamment le cas d'ensembles propulsifs rapportés sur l'extérieur d'aéronefs, particulièrement lorsque ces ensembles propulsifs sont attachés sous les ailes ou à l'arrière du fuselage. Nous appellerons capotage extérieur l'ensemble constitué par la paroi extérieure du conduit et par la paroi extérieure de la nacelle.

La présente invention concerne un dispositif d'inversion dit "à portes" similaire à ce qui est déjà connu par FR-A-1 482 538, FR-A-2 030 034 et US 3 605 411.

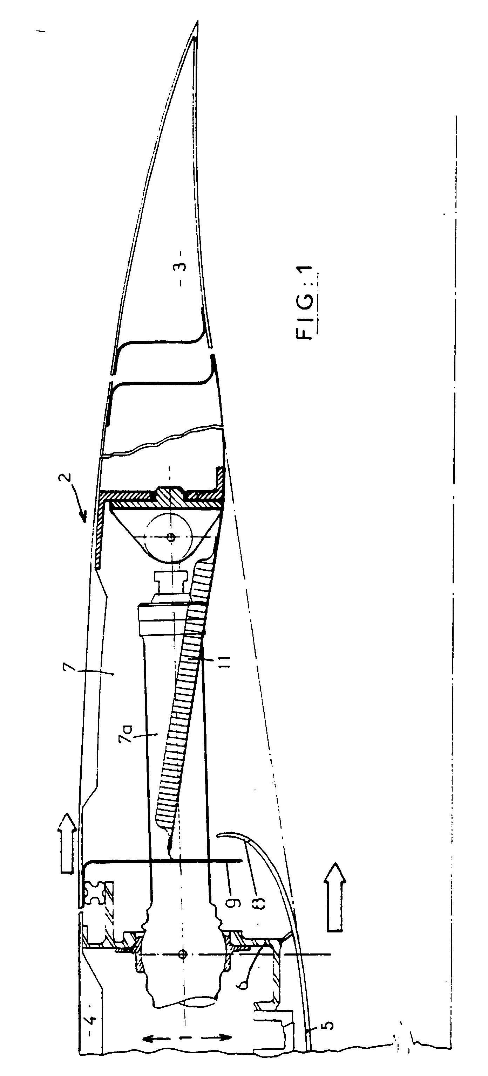

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre 6 sert également de support au dispositif de commandes des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion. Lesdites portes 7 sont montées pivotantes dans une zone intermédiaire de leurs parois latérales sur des poutres situées de part et d'autre de ces portes.

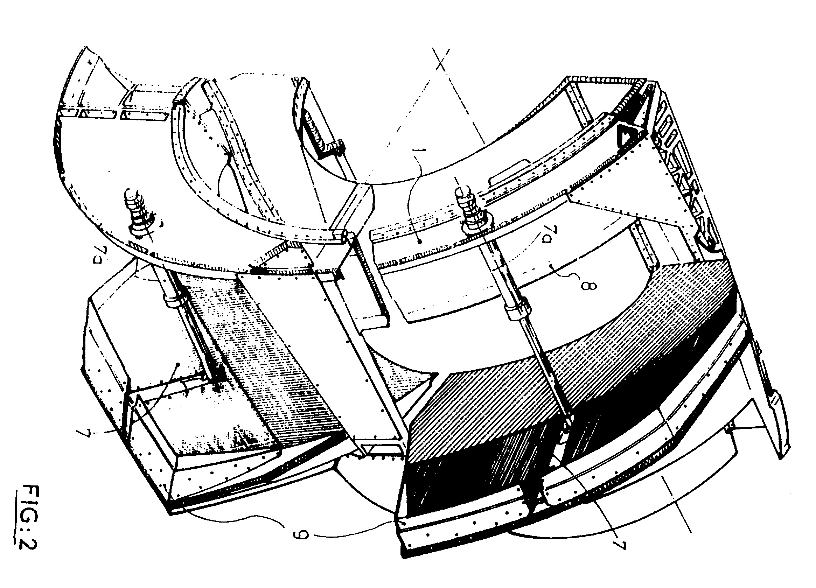

La figure 2 montre, selon une vue schématique partielle en perspective un exemple d'application d'un tel inverseur de poussée à un turboréacteur à double flux, l'inverseur comportant dans ce cas quatre portes 7 dont deux sont visibles sur la figure 2 et sont montrées ouvertes, correspondant à un fonctionnement en inversion de poussée. Chaque porte 7 est associée à un moyen de commande des déplacements tel qu'un vérin 7a.

En position activée, les portes 7 basculent de telle façon que la partie des portes située en aval des pivots vient obstruer plus ou moints totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes 7 est ajusté de manière à détruire la poussée de ce flux, voire à commencer à générer une contre-poussée en créant une composante de flux dirigée vers l'amont. Les portes 7 peuvent également être munies dans leur partie amont, d'un becquet 9 faisant saillie vers l'avant, lorsque les portes 7 sont déployées, par rapport à la face interne des portes, de manière à dévier le flux plus vers l'amont et achever d'obtenir la composante de contre-poussée.

Le dispositif d'inversion est également muni, sur la partie fixe 1 amont du capotage, d'un bord de déviation 8, dont le but est d'optimiser l'écoulement dans les passages dégagés par les portes lorsque celles-ci sont déployées.

Des exemples de réalisation de ce type d'inverseur de poussée de turboréacteur à portes basculantes sont décrits notamment par FR-A-2 618 853, FR-A-2 618 852, FR-A-2 621 082, FR-A-2 627 807, FR-A-2 634 251, FR-A-2 638 207 et FR-A-2 651 021 dont est titulaire la demanderesse.

Les solutions connues actuelles laissent cependant subsister certains problèmes mal résolus et présentent quelques inconvénients. Ainsi, un effet de pression dynamique dû au mouvement de l'avion dans l'air tend à créer un effet de "gavage" de l'inverseur par un flux contraire au flux de contre-poussée et tend à décroître le rendement de l'inverseur de plusieurs manières :
- par un effet de réduction de section efficace dû à une formation tourbillonnaire au niveau du puits d'inversion ;
- par la modification de la résultante du vecteur vitesse ;
- par la création d'instabilités sur le profil des vitesses d'éjection et les risques associés de pompage du moteur dû aux variations de la pression aval ;
- par les difficultés d'assurer un pilotage adéquat des nappes du flux inversé entraînant des risques de réingestion ou d'impacts ;
- en outre, cela entraîne des efforts mécaniques importants sur la porte d'où résulte un accroissement de masse préjudiciable.

On connaît par ailleurs par FR.A.2 146 109 un inverseur de poussée à grilles d'aubes de déviation de flux comportant des volets internes articulés à l'arrière obturant le passage des gaz en inversion. L'inverseur comprend en outre des volets externes, chacun formant un élément mobile supplémentaire, directement associé à la structure de l'inverseur et susceptible, lors du fonctionnement en jet direct de s'intégrer dans le capotage extérieur et lors du fonctionnement en inversion de poussée, de se déployer au bord amont du puits d'inversion.

Un inverseur de poussée de turboréacteur à double flux permettant d'éviter les inconvénients précédemment notés est caractérisé en ce que l'amont de la porte secondaire pivote dans le même sens que celui de la porte principale dans une direction centrifuge, de manière à créer un obstacle au flux extérieur s'écoulant sur la surface de la paroi extérieure de la nacelle et à canaliser le flux inversé, en créant avec la porte un conduit de flux d'inversion faisant saillie à l'extérieur du capotage extérieur.

D'autres caractéristiques et avantages de l'invention seront mieux compris à la lecture de la description qui va suivre d'exemples de réalisation de l'invention, en référence aux dessins annexés sur lesquels :
- la figure 1 représente un demi-vue schématique en coupe longitudinale par un plan passant par l'axe de rotation d'un turboréacteur, d'un inverseur de poussée à portes pivotantes, en position fermée, d'un type connu et qui a fait précédemment l'objet d'une description ;
- la figure 2 représente une vue partielle en perspective de l'inverseur de poussée représenté sur la figure 1, en position déployée ;
- la figure 3 représente une demi-vue schématique analogue à celle de la figure 1 d'un inverseur de poussée à portes pivotantes muni de portes secondaires suivant un mode de réalisation de l'invention, dans la position fermée ;
- la figure 4 représente une demi-vue schématique analogue à celle des figures 1 et 3 de l'inverseur de poussée représenté sur la figure 3, dans la position déployée ;
- la figure 5 représente une vue schématique en coupe d'une porte secondaire conforme à l'invention ;
- la figure 6 représente une vue de face schématique de la porte secondaire représentée sur la figure 5 ;
- la figure 7 représente une vue schématique en perspective de la porte secondaire représentée sur les figures 5 et 6 ;
- la figure 8 montre selon une vue schématique en perspective un exemple de montage de portes secondaires d'inverseur de poussée conformes à l'invention sur nacelle, dans la position fermée ;
- la figure 9 montre selon une vue schématique en perspective analogue à celle de la figure 8 les portes secondaires représentées sur la figure 8, dans la position déployée ;
- la figure 10 représente suivant une demi-vue schématique analogue à celles des figures 1 et 3 une variante de mise en place des portes secondaires conformes à l'invention, dans la position fermée ;
- la figure 11 représente suivant une demi-vue schématique analogue à celle de la figure 4 l'inverseur de poussée représenté sur la figure 10, en position déployée ;
- la figure 12 représente suivant une demi-vue schématique analogue à celle des figures 1, 3 et 10 une variante de réalisation de porte secondaire conforme à l'invention, en position fermée ;
- la figure 13 représente suivant une demi-vue schématique analogue à celles des figures 4 et 11 l'inverseur de poussée représenté sur la figure 12, en position déployée ;
- la figure 14 représente suivant une demi-vue schématique analogue à celles des figures 1, 3, 10 et 12 une autre variante de mise en place des portes secondaires conformes à l'invention, dans la position fermée ;
- la figure 15 représente une demi-vue schématique analogue à celles des figures 4, 11 et 13 l'inverseur de poussée représenté sur la figure 14, en position déployée ;
- la figure 16 représente suivant une demi-vue schématique analogue à celle de la figure 15 l'inverseur de poussée représenté sur les figures 14 et 15 dans une position où les portes secondaires seulement sont déployées.

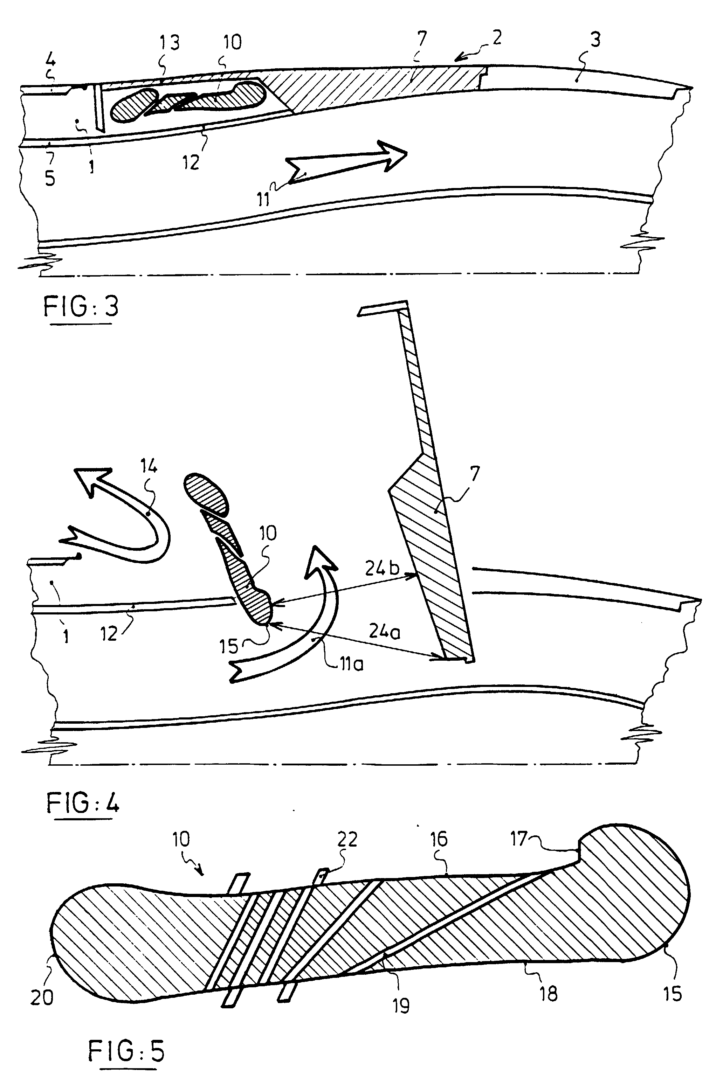

Les applications de l'invention décrites en référence aux dessins annexés concernent un inverseur de poussée de turboréacteur à double flux d'un type dit à portes et dans ce cas, comme cela a précédemment été décrit en référence aux figures 1 et 2 représentant un exemple connu de réalisation, l'inverseur de poussée schématiquement représenté sur les figures 3 et 4 comporte également une partie fixe amont 1 composée d'un panneau externe 4 et d'un panneau interne 5, une partie mobile 2 constituée de portes principales 7 et une virole arrière fixe 3.

De manière remarquable et conforme à l'invention, la porte principale 7 est associée à une porte secondaire 10. Ledit panneau interne 5 de la partie fixe amont formant la paroi externe de la veine du flux secondaire symbolisé par la flèche 11 est prolongé par une partie 12 et, en position fermée telle que représentée sur la figure 3, ladite porte secondaire 10 est disposée entre ladite partie 12 de capotage de veine et un panneau externe 13 de la porte principale 7. De cette manière, une continuité aérodynamique parfaite est assurée à la fois pour l'écoulement interne de veine 11 et pour l'écoulement externe de nacelle. En outre un système de joints analogue aux dispositions décrites par FR-A-2 651 021 peut être installé afin d'assurer l'étanchéité en position fermée entre la porte principale 7 et la porte secondaire 10, ce qui permet d'assurer un équilibrage de la porte principale 7 dans le sens de l'auto- fermeture, de manière à éviter tout déploiement intempestif. De cette manière en effet, la pression interne de veine s'exerce préférentiellement sur la partie interne aval de la porte principale 7 et induit un couple auto-fermant.

Un système non représenté en détail sur les dessins permet le passage en position déployée telle que schématisée sur la figure 4. Des moyens connus en soi sont utilisés pour obtenir les déplacements de la porte secondaire 10. Une liaison mécanique peut notamment être établie entre la porte secondaire 10 et le système de commande à vérin 7a des déplacements de la porte principale 7. En variante, la commande des déplacements de la porte secondaire 10 peut être assurée grâce à des moyens indépendants. En position déployée, la porte secondaire 10 se place en appui à l'extrémité de la partie aval 12 du capotage extérieur en évitant l'apparition de fuites. L'association de la porte principale 7 et de la porte secondaire 10, en position déployée, forme une véritable veine et tuyère d'où peut s'écouler le flux inversé symbolisé par la flèche 11a sur la figure 4. L'entrée de la tuyère/veine est schématisée en 24a et le puits d'inversion de l'inverseur en 24b. Par ailleurs le flux externe circulant sur la paroi extérieure de nacelle, symbolisé par la flèche 14, est arrêté et dévié par la porte secondaire 10. Une direction déterminée est ainsi appliquée au flux inversé sans être perturbé par l'écoulement externe. En outre, un profil de vitesse plus stable s'établit en sortie du puits d'inversion 24 du fait de l'absence des effets de mélange entre l'écoulement interne et l'écoulement externe. Cet effet de stabilisation est important pour éviter des effets d'incompatibilité entre turboréacteur et inverseur en phase d'inversion de poussée. L'écran établi par la porte secondaire 10 entre le flux externe 14 et le flux interne 11a permet également de réduire la déviation du flux inversé 11a occasionnée par le flux externe 14. Ces effets induisent également une meilleure répartition des efforts sur la porte principale 7.

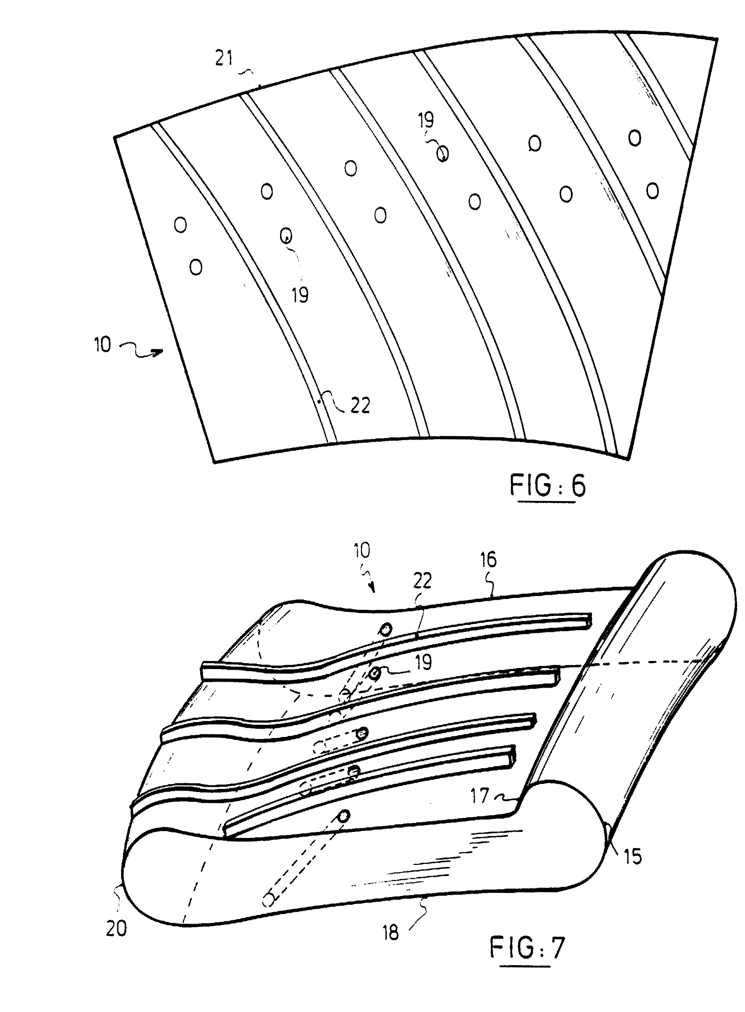

Certains aménagements particuliers peuvent en outre être apportés à la réalisation de la porte secondaire 10 de manière à améliorer les conditions de fonctionnement. Du fait que la porte secondaire 10 est retirée de tout flux dans la position fermée, un profil optimal peut être déterminé pour toutes les faces de la porte 10, adapté au fonctionnement en position déployée. L'extrémité aval 15 de la porte secondaire 10 constitue ainsi un bord de déviation optimisé permettant de minimiser le décollement. Comme détaillé sur les figures 5 et 7 entre la face d'extrados 16 de la porte secondaire 10 et le bord de déviation 15, une marche 17 peut être aménagée afin de créer une dépression locale qui provoquerait un recollement prématuré. Entre les faces d'extrados 16 et d'intrados 18 de la porte secondaire 10 des fentes ou trous tels que 19 peuvent être prévus, orientés suivant l'angle approprié et placés de telle façon qu'un fort recollement de l'écoulement interne intervienne sur la porte afin d'accroître le débit sortant du puits d'inversion. Ils sont percés après le point d'arrêt de l'écoulement externe 14 sur l'intrados 18 de la porte secondaire 10, dans une direction empêchant tout écoulement dans le sens contraire. De cette manière, l'écoulement externe, ayant impacté la porte secondaire 10, entraîne l'écoulement interne et le plaque contre l'extrados 16 de la porte secondaire 10. De même, l'extrémité amont 20 de la porte secondaire 10 est également profilée de manière à constituer un bord de déviation optimisé ayant pour effet d'orienter l'écoulement interne de façon à produire le maximum de contre-poussée tout en assurant un débit approprié. Comme représenté sur la figure 6, un détourage 21 optimal de la porte secondaire 10 le long du panneau fixe amont et du panneau externe de la porte principale 7 permet d'effectuer un pilotage des nappes et notamment d'empêcher une réingestion ou un impact de jet susceptible de détériorer le contrôle de l'avion en phase d'atterrissage. En outre des rainures et/ou des chicanes 22 peuvent être ajoutées sur l'extrados 16 et/ou l'intrados 18 de la porte secondaire 10 afin de diriger de façon tridimensionnelle le jet dans la direction recherchée et assurer un meilleur guidage de l'écoulement. Dans la configuration représentée sur la figure 4 où la porte secondaire 10 déborde dans l'écoulement interne, la création d'un col est avantageuse lorsque l'écoulement est lent et à fort débit.

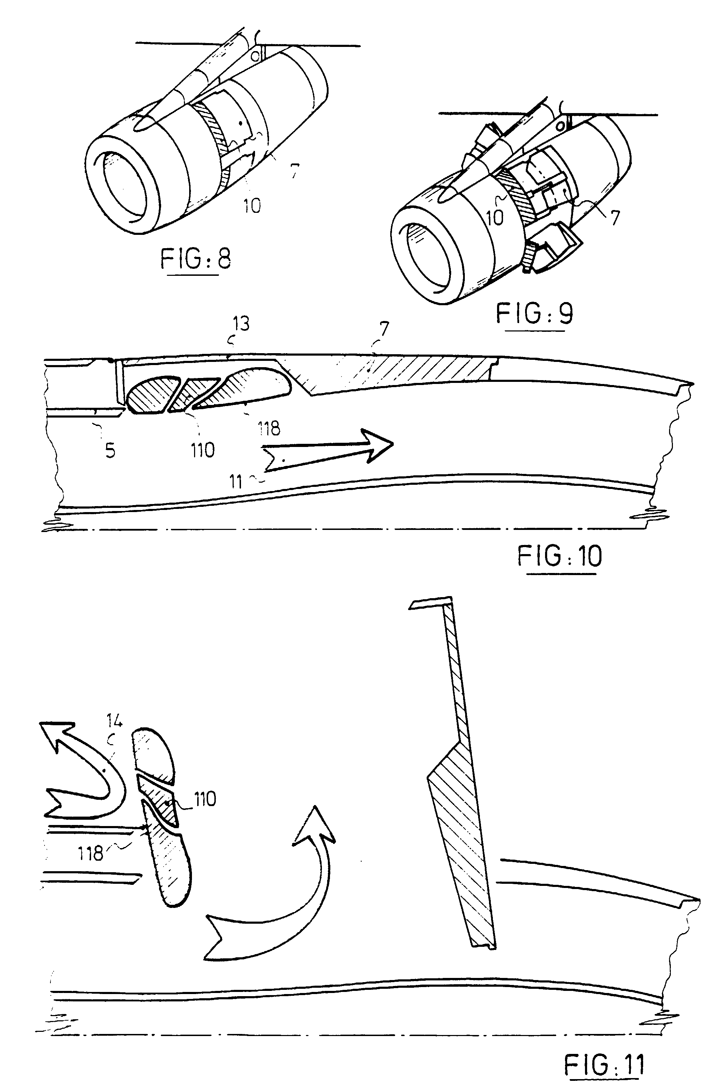

Les figures 8 et 9 montrent un exemple de montage de la porte secondaire 10 sur un ensemble de propulsion avionné. La porte secondaire 10 du fait de son orientation en position déployée constitue une écope/aérofrein dont l'effet accroit le freinage global de l'avion en phase d'atterrissage.

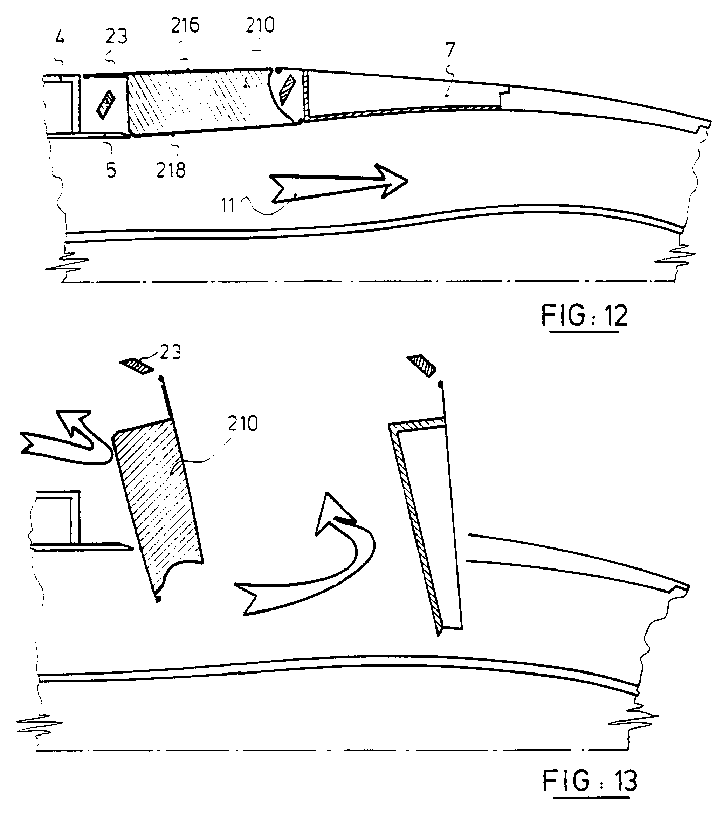

Certaines variantes de réalisation de l'invention peuvent être envisagées. Selon une première variante, représentée sur les figures 10 et 11, la porte secondaire 110 en position fermée reste, comme précédemment décrit en référence à la figure 3, recouverte par le panneau externe 13 de la porte principale 7. Par contre, la face d'intrados 118 de la porte secondaire 10 forme lors du fonctionnement en jet direct une partie de la paroi extérieure du canal de circulation du flux, symbolisé par la flèche 11. En conséquence, le profil de surface d'intrados 118 est optimisé pour assurer la continuité aérodynamique entre la paroi interne 5 de la structure fixe amont et la paroi interne de la porte principale 7. Dans ce cas une légère inadaptation de l'intrados 118 est admise pour la déviation du flux externe 14 dans la position déployée représentée sur la figure 10 et correspondant au fonctionnement en inversion de poussée. Toutes les autres conditions de fonctionnement décrites en référence aux figures 3 à 9 sont identiques et les avantages précédemment décrits sont conservés. On relève par rapport à cette réalisation précédente une simplification et un allègement complémentaire de la nacelle et notamment la suppression de la partie 12 du capotage extérieur de veine telle que représentée sur les figures 3 et 4. La présente disposition de la porte secondaire 10 permet également d'assurer les avantages de stabilité de la porte principale 7 en position fermée tels qu'ils sont obtenus dans l'inverseur de poussée décrit par FR-A-2 651 021.

Suivant une deuxième variante de réalisation, représentée sur les figures 12 et 13, la porte secondaire 210 conforme à l'invention assure, en position fermée, la continuité des lignes aérodynamiques à la fois au niveau de la paroi extérieure du conduit où la face d'intrados 218 de la porte secondaire 210 assure la continuité entre la paroi interne 5 de structure fixe amont et la paroi interne de la porte principale 7 et au niveau de la paroi extérieure de nacelle où la face d'extrados 216 de la porte secondaire 210 assure la continuité entre la paroi externe 4 de structure fixe amont et la paroi externe de la porte principale 7. Dans ce cas le profil de surface d'intrados 218 est optimisé pour assurer les meilleures conditions d'écoulement aérodynamique du jet direct 11 en vue d'obtenir les performances optimales. De même le profil de surface d'extrados 216 de la porte secondaire 210 est adapté à l'écoulement externe. Dans ce but, la création de chicanes telles que 22 dans la réalisation décrit en référence aux figures 3 à 9 est évitée dans ce cas. Les autres modalités de réalisation précédemment décrites peuvent par ailleurs être retenues dans cette variante de réalisation pour laquelle les conditions de fonctionnement et les avantages obtenus restent également identiques aux réalisations précédemment décrites. On relève que l'optimisation des profils de surface d'intrados 218 et d'extrados 216 pour les fonctions de la position déployée ne peut pas être appliquée dans ce cas. Cependant une disposition de becquet mobile 23 peut être adjointe afin d'accroître l'efficacité de la porte secondaire 210.

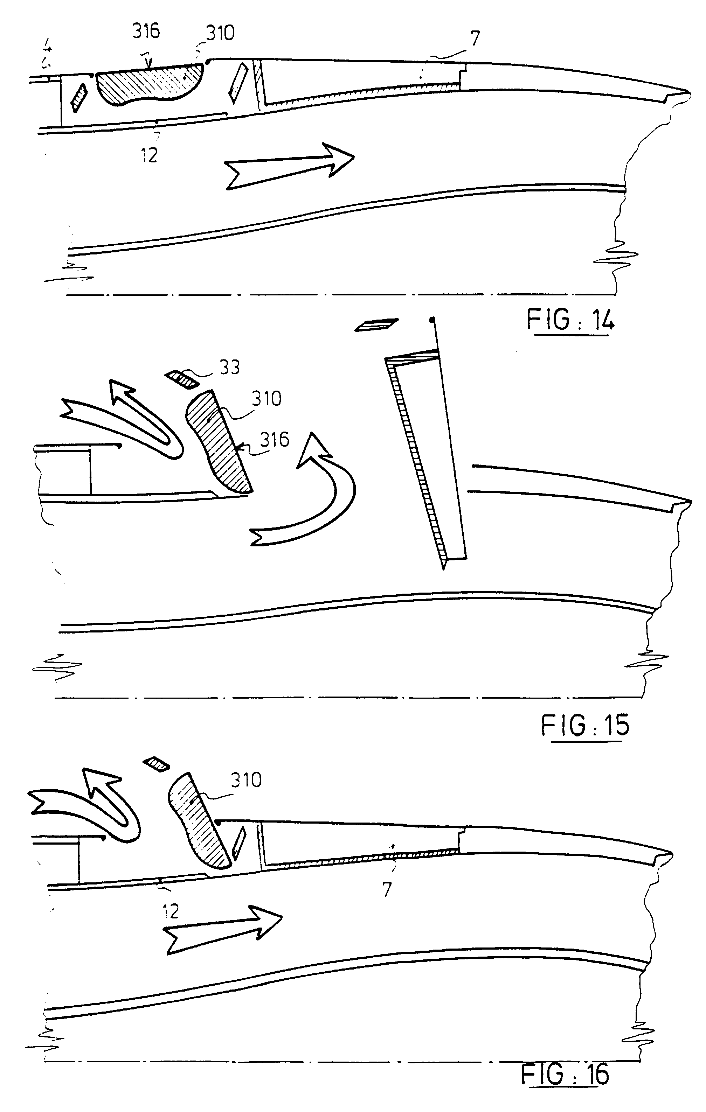

Suivant une troisième variante de réalisation, représentée sur les figures 14 à 16, la porte secondaire 310 conforme à l'invention assure, en position fermée, la continuité des lignes aérodynamiques uniquement sur la surface externe de capotage extérieur. La face d'extrados 316 de la porte secondaire 310 assure dans ce cas la continuité entre la paroi externe 4 de structure fixe amont et la paroi externe de la porte principale 7. La continuité de la paroi de capotage extérieur est assurée entre une partie aval 12 de structure fixe amont et la paroi interne de la porte principale 7, la porte secondaire 310 surmontant ladite partie aval de paroi fixe. Par rapport à la réalisation précédemment décrite en référence aux figures 3 à 9, une certaine inadaptation du profil de surface d'extrados 316 de la porte secondaire 310 est admise dans ce cas lors du fonctionnement en inversion de poussée, dans la position déployée représentée sur la figure 15. On notera également l'absence de chicanes 22 sur ladite surface d'extrados 316. Par contre, toutes les autres conditions de fonctionnement décrites en référence aux figures 3 à 9 sont identiques et les avantages précédemment décrits sont conservés. Comme dans la deuxième variante de réalisation représentée sur la figure 13, un becquet mobile 33 peut également être adjoint à la porte secondaire 310 pour accroître son efficacité.

La troisième variante de réalisation présente en outre un avantage supplémentaire par rapport aux réalisations précédemment décrites. En effet, comme cela est schématiquement représenté sur la figure 16, la porte secondaire 310 peut prendre une position déployée tandis que la porte principale 7 reste en position fermée. En effet, la partie aval 12 du capotage extérieur et la paroi interne de la porte principale 7 assurent dans ce cas l'étanchéité de veine lors du fonctionnement en jet direct. Par suite la porte secondaire 310 devient assimilable à une commande de vol et peut être déployée dans diverses conditions de vol. Parmi de nombreuses utilisations possibles on relève ainsi les possibilités suivantes des portes secondaires 310 qui peuvent :
- accentuer la vitesse de roulis lorsqu'elles sont déployées de façon dissymétriques de part et d'autre de l'avion ;
- ré-alimenter des ailerons ou volets à haute incidence de l'avion ;
- servir d'aérofrein dans les phases d'approche et/ou de descente.

La représentation de l'invention donnée par les dessins montre une porte secondaire associée à une seule porte principale. Les réalisations où les portes secondaires sont associées à une seule, plusieurs ou toutes les portes principales qui peuvent être en nombre variable dans un inverseur de poussée font également partie de l'invention.

Alors que les exemples de réalisation décrits correspondent à un type d'inverseur de poussée dit "à portes", les portes secondaires conformes à l'invention peuvent également être montées sur d'autres types d'inverseurs de poussée tels que des inverseurs à grilles ou des inverseurs à obstacle aval.

## Revendications

1. Inverseur de poussée de turboréacteur à double flux comportant des portes principales (7) susceptibles, en position fermée, de s'intégrer dans le capotage extérieur lors du fonctionnement en jet direct et, en position déployée, de pivoter autour de pivots latéraux portés par la structure fixe de l'inverseur sous l'action d'un moyen de commande des déplacements tels qu'un vérin (7a) de manière à dévier au moins une partie du flux d'éjection (lla) du turboréacteur à travers un espace constituant un puits d'inversion en assurant une inversion de poussée et au moins un élément mobile supplémentaire appelé porte secondaire (10;110;210;310) et directement associé à la structure de l'inverseur est adjoint, susceptible, lors du fonctionnement en jet direct, de s'intégrer dans le capotage extérieur et, lors du fonctionnement en inversion de poussée, de se déployer au bord amont du puits d'inversion (24b), caractérisé en ce que l'amont de la porte secondaire (10;110;210;310) pivote dans le même sens que celui de la porte principale (7) dans une direction centrifuge de manière à créer un obstacle au flux extérieur (14) s'écoulant sur la surface de la paroi extérieure (4) de la nacelle et à canaliser le flux inversé, en créant avec la porte un conduit de flux d'inversion faisant saillie à l'extérieur du capotage extérieur.

2. Inverseur de poussée de turboréacteur à double flux selon la revendication 1 dans lequel ladite porte secondaire (10) est disposée, en position fermée, entre une partie aval (12) de capotage exterieur et un panneau externe (13) de la porte principale (7) associée.

3. Inverseur de poussée de turboréacteur à double flux selon la revendication 2 dans lequel l'extrémité aval en position fermée (15) de ladite porte secondaire (10) est profilée de manière à constituer en position déployée correspondant au fonctionnement en inversion de poussée un bord de déviation déterminé formant le bord amont du puits d'inversion, l'extrémité amont en position fermée (20) de ladite porte secondaire (10) est profilée de manière à constituer un bord de déviation déterminé orientant les écoulements avec la meilleure efficacité, les faces d'extrados (18) et d'intrados (16) ont un profil déterminé adapté à l'obtention de l'efficacité des écoulements aérodynamiques et des performances recherchées en inversion de poussée.

4. Inverseur de poussée de turboréacteur à double flux selon la revendication 3 dans lequel ladite porte secondaire (10) comporte une marche (17) aménagée sur la face d'extrados (16) afin de créer une dépression locale, entre les faces d'extrados (16) et d'intrados (18) des trous ou fentes (19) et sur lesdites faces d'extrados (16) et d'intrados (18) des chicanes ou rainures (22) dont les dimensions et les orientations sont déterminées pour assurer la direction et le guidage des écoulements aérodynamiques.

5. Inverseur de poussée de turboréacteur à double flux selon l'une des revendications 3 ou 4 dans lequel ladite porte secondaire (10) présente un détourage (21) déterminé en vue d'assurer le pilotage des nappes du flux inversé (11a).

6. Inverseur de poussée de turboréacteur à double flux selon l'une quelconque des revendications 2 à 5 dans lequel ladite porte secondaire (10) déborde dans l'écoulement interne en position déployée, l'extrémité aval en position fermée (15) de la porte secondaire étant disposée en position radialement interne par rapport à la paroi fixe (12).

7. Inverseur de poussée de turboréacteur à double flux selon la revendication 1 dans lequel ladite porte secondaire (110) est recouverte, en position fermée, par un panneau externe (13) de la porte principale (7) et présente une face d'intrados (118) formant, lors du fonctionnement en jet direct, une partie de la paroi extérieure du conduit de turboréacteur, en continuité entre la paroi fixe amont (5) et la paroi interne de la porte principale (7).

8. Inverseur de poussée de turboréacteur à double flux selon la revendication 1 dans lequel ladite porte secondaire (210) comporte à la fois une face d'intrados (218) en continuité, en position fermée, entre la paroi interne (5) de structure fixe amont et la paroi interne de la porte principale associée (7) et une face d'extrados (216) également en continuité, en position fermée, entre la paroi externe (4) de structure fixe amont et la paroi externe de la porte principale (7) de manière que ladite porte secondaire (210) assure en partie, lors du fonctionnement en jet direct, à la fois le guidage des écoulements aérodynamiques du flux (11) de turboréacteur et du flux externe de nacelle.

9. Inverseur de poussée de turboréacteur à double flux selon la revendication 1 dans lequel ladite porte secondaire (310) comporte une face d'extrados (316) assurant la continuité, en position fermée, entre la paroi externe (4) de structure fixe amont et la paroi externe de la porte principale (7) associée et, en position fermée, ladite porte secondaire (310) surmonte une partie aval (12) interne de structure fixe amont qui se raccorde, lors du fonctionnement en jet direct, en continuité avec la paroi interne de la porte principale (7).

10. Inverseur de poussée de turboréacteur à double flux selon l'une des revendications 8 ou 9 dans lequel un becquet mobile (23; 33) est adjoint du côté amont à ladite porte secondaire (210; 310) de manière à accroître son efficacité lors du fonctionnement en inversion de poussée.

11. Inverseur de poussée de turboréacteur à double flux selon l'une des revendications 9 ou 10 dans lequel ladite porte secondaire (310) est susceptible d'être déployée en maintenant la porte principale (7) en position fermée au cours de certaines phases de vol de l'avion correspondant à un fonctionnement en jet direct du turboréacteur.

12. Inverseur de poussée de turboréacteur à double flux selon l'une quelconque des revendications 1 à il dans lequel ladite porte secondaire (10;110;210;310) se déploie de façon indépendante ou non de la porte principale (7), en fonction du flux de contre-poussée provenant du turboréacteur en conservant une efficacité maximale de la fonction d'écopage de ladite porte secondaire lors des phases de contre-poussée.

## Patentansprüche

1. Schubumkehrvorrichtung für ein Zweikreis-TL-Triebwerk, die Hauptklappen (7) aufweist, die sich im Direktschubbetrieb in geschlossener Stellung in die Außenverkleidung einfügen können und in ausgeklappter Stellung unter Einwirkung eines Steuermittels für die Bewegungen wie z. B. eines Zylinders (7a) dergestalt um seitliche, an dem festen Aufbau der Umkehrvorrichtung sitzende Drehzapfen schwenken können, daß sie zumindest einen Teil des Ausstoßstroms (11a) des Turbotriebwerks durch einen Raum umlenken, der einen Umkehrschacht bildet, und dabei eine Schubumkehr gewährleisten, und mindestens ein zusätzliches bewegliches Element aufweist, das Sekundärklappe (10; 110; 210; 310) genannt wird und direkt mit dem Aufbau der Umkehrvorrichtung verbunden ist und sich im Direktschubbetrieb in die Außenverkleidung einfügen kann und sich im Schubumkehrbetrieb am vorderen Rand des Umkehrschachts (24b) ausklappen kann,
**dadurch gekennzeichnet, daß** die Vorderseite der Sekundärklappe (10; 110; 210; 310) in der gleichen Richtung wie die der Hauptklappe (7) in einer Zentrifugalrichtung schwenkt, so daß für den äußeren Strom (14), der über die Oberfläche der Außenwand (4) der Gondel strömt, ein Hindernis entsteht, und daß der Umkehrstrom kanalisiert wird, indem mit der Klappe eine Umkehrstromleitung gebildet wird, die aus der Außenverkleidung hervorsteht.

2. Schubumkehrvorrichtung für ein Zweikreis-TL-Triebwerk nach Anspruch 1, bei der die genannte Sekundärklappe (10) in geschlossener Stellung zwischen einem hinteren Teil (12) der Außenverkleidung und einer Außenplatte (13) der zugehörigen Hauptklappe (7) angeordnet ist.

3. Schubumkehrvorrichtung für ein Zweikreis-TL-Triebwerk nach Anspruch 2, bei der das in geschlossener Stellung hintere Ende (15) dieser Sekundärklappe (10) ein Profil dergestalt aufweist, daß es in ausgeklappter Stellung, die dem Schubumkehrbetrieb entspricht, einen bestimmten Umlenkrand bildet, der den vorderen Rand des Umkehrschachts bildet, wobei das in geschlossener Stellung vordere Ende (20) dieser Sekundärklappe (10) ein Profil dergestalt aufweist, daß es einen bestimmten Umlenkrand bildet, der die Ströme so effektiv wie möglich ausrichtet, und die Druckseite (18) und die Saugseite (16) ein bestimmtes Profil aufweisen, das geeignet ist, die aerodynamischen Strömungen und gewünschten Leistungen im Umkehrschub wirksam zu erreichen.

4. Schubumkehrvorrichtung für ein Zweikreis-TL-Triebwerk nach Anspruch 3, bei der diese Sekundärklappe (10) eine Stufe (17) aufweist, die an der Saugseite (16) ausgeführt ist, um einen örtlich begrenzten Unterdruck zu schaffen, ferner zwischen der Saugseite (16) und der Druckseite (18) Löcher oder Schlitze (19) aufweist und auf dieser Saugseite (16) und der Druckseite (18) Stauränder oder Rillen (22) mit bestimmten Abmessungen und Ausrichtungen aufweist, um die Richtung und Führung der aerodynamischen Strömungen zu gewährleisten.

5. Schubumkehrvorrichtung für ein Zweikreis-TL-Triebwerk nach einem der Ansprüche 3 oder 4, bei der diese Sekundärklappe (10) ein bestimmtes Außenprofil (21) aufweist, um das Steuern der Strombahnen des Umkehrstroms (11a) zu gewährleisten.

6. Schubumkehrvorrichtung für ein Zweikreis-TL-Triebwerk nach einem der Ansprüche 2 bis 5, bei der diese Sekundärklappe (10) in ausgeklappter Stellung in den inneren Strom mündet, wobei das in geschlossener Stellung hintere Ende (15) der Sekundärklappe radial gegenüber der feststehenden Wand (12) innen angeordnet ist.

7. Schubumkehrvorrichtung für ein Zweikreis-TL-Triebwerk nach Anspruch 1, bei der die genannte Sekundärklappe (110) in geschlossener Stellung von einer Außenplatte (13) der Hauptklappe (7) überdeckt wird und eine Druckseite (118) bildet, die im Direktstrahlbetrieb unter Kontinuität zwischen der vorderen festen Wand (5) und der Innenwand der Hauptklappe (7) einen Teil der Außenwand der Turbotriebwerksleitung bildet.

8. Schubumkehrvorrichtung für ein Zweikreis-TL-Triebwerk nach Anspruch 1, bei der die genannte Sekundärklappe (210) eine Druckseite (218) aufweist, die in geschlossener Stellung die Kontinuität zwischen der Innenwand (5) des vorderen festen Aufbaus und der Innenwand der jeweiligen Hauptklappe (7) gewährleistet, sowie eine Saugseite (216) aufweist, die gleichzeitig in geschlossener Stellung ebenfalls Kontinuität zwischen der Außenwand (4) des vorderen festen Aufbaus und der Außenwand der Hauptklappe (7) gewährleistet, so daß diese Sekundärklappe (210) im Direktstrahlbetrieb zugleich die Führung der aerodynamischen Strömungen des Turbotriebwerkstroms (11) und des Außenstroms der Gondel teilweise gewährleistet.

9. Schubumkehrvorrichtung für ein Zweikreis-TL-Triebwerk nach Anspruch 1, bei der die genannte Sekundärklappe (310) eine Saugseite (316) aufweist, die in geschlossener Stellung die Kontinuität zwischen der Außenwand (4) des vorderen festen Aufbaus und der Außenwand der zugehörigen Hauptklappe (7) gewährleistet, und wobei diese Sekundärklappe (310) sich in geschlossener Stellung über einem inneren hinteren Teil (12) des vorderen festen Aufbaus befindet, der sich im Direktstrahlbetrieb in Kontinuität an die Innenwand der Hauptklappe (7) anschließt.

10. Schubumkehrvorrichtung für ein Zweikreis-TL-Triebwerk nach einem der Ansprüche 8 oder 9, bei der vorne an dieser Sekundärklappe (210; 310) zusätzlich ein beweglicher Spoiler (23; 33) dergestalt angeordnet wird, daß er ihre Wirksamkeit in Umkehrschubbetrieb erhöht.

11. Schubumkehrvorrichtung für ein Zweikreis-TL-Triebwerk nach einem der Ansprüche 9 oder 10, bei der in bestimmten Flugphasen des Flugzeugs im Direktstrahlbetrieb des Turbotriebwerks diese Sekundärklappe (310) ausgeklappt werden kann und die Hauptklappe (7) dabei in geschlossener Stellung gehalten wird.

12. Schubumkehrvorrichtung für ein Zweikreis-TL-Triebwerk nach einem der Ansprüche 1 bis 11, bei der diese Sekundärklappe (10; 110; 210; 310) sich je nach dem vom Turbotriebwerk kommenden Gegenschubstrom unabhängig von oder gemeinsam mit der Hauptklappe (7) ausklappt und dabei eine maximale Wirksamkeit der Luftumlenkfunktion dieser Sekundärklappe bei den Gegenschubphasen aufrecht erhält.

## Claims

1. Turbofan thrust reverser comprising main flaps (7) capable, in the closed position, of fitting inside the outer fairing of the nacelle during operation in direct jet mode and, in the deployed position, of pivoting about lateral pivots by the stationary structure of the reverser under the action of a means for commanding movement such as a jack (7a) so as to deflect at least some of the jet (11a) from the turbojet through a space constituting a reversal well and reversing thrust, and at least one additional mobile element known as a secondary flap (10; 110; 210; 310) directly associated with the structure of the reverser is added, this being capable, during operation in direct jet mode, of fitting inside the outer fairing of the nacelle and, during operation in reverse thrust mode, of being deployed at the upstream edge of the reversal well (24b), characterized in that the upstream side of the secondary flap (10; 110; 210; 310) pivots in the same direction as the main flap (7) in a centrifugal direction so as to create an obstacle to the outer stream (14) flowing over the surface of the outer wall (4) of the nacelle and so as to channel the reversed stream, creating, with the flap, a reversed-stream passage which projects out from the outer fairing.

2. Turbofan thrust reverser according to Claim 1, in which the said secondary flap (10) is arranged, in the closed position, between a downstream part (12) of the outer fairing and an outer panel (13) of the associated main flap (7).

3. Turbofan thrust reverser according to Claim 2, in which the downstream end (15), in the closed position, of the said secondary flap (10) is profiled in such a way that in the deployed position corresponding to operation in reverse thrust mode, it constitutes a predetermined deflection edge forming the upstream edge of the reversal well, the upstream end (20), in the closed position, of the said secondary flap (10) is profiled in such a way as to constitute a predetermined deflection edge directing the flows with the best efficiency, the suction face (18) and pressure face (16) have a predetermined profile designed to achieve efficient aerodynamic flow and the desired thrust reversal performance.

4. Turbofan thrust reverser according to Claim 3, in which the said secondary flap (10) has a step (17) formed on the suction face (16) so as to create a local depression, holes or slots (19) between the suction face (16) and pressure face (18), and, on the said suction face (16) and pressure face (18), baffles or grooves (22), the dimensions and orientations of which are predetermined so as to direct and guide the aerodynamic flow.

5. Turbofan thrust reverser according to either of Claims 3 and 4 in which the said secondary flap (10) has a predetermined edging (21) so as to steer the layers of the reversed flow (11a).

6. Turbofan thrust reverser according to any one of Claims 2 to 5 in which the said secondary flap (10) overhangs into the inner flow in the deployed position, the downstream end (15), in the closed position, of the secondary flap being situated in a radially inward position with respect to the fixed wall (12).

7. Turbofan thrust reverser according to Claim 1, in which the said secondary flap (110) is covered, in the closed position, by an outer panel (13) of the main flap (7) and has a suction face (118) which, during operation in direct jet mode, forms part of the outer wall of the turbojet duct, in continuity between the upstream fixed wall (5) and the internal wall of the main flap (7).

8. Turbofan thrust reverser according to Claim 1 in which the said secondary flap (210) has both a pressure face (218) which, in the closed position, is in continuity between the inner wall (5) of the upstream fixed structure and the inner wall of the associated main flap (7), and a suction face- (216) which is also, in the closed position, in continuity between the outer wall (4) of the upstream fixed structure and the outer wall of the main flap (7) so that the said secondary flap (210) partially, during operation in direct jet mode, guides both the aerodynamic flow of the turbojet (11) and the nacelle external flow.

9. Turbofan thrust reverser according to Claim 1 in which the said secondary flap (310) has a suction face (316) which, in the closed position, provides continuity between the outer wall (4) of the upstream fixed structure and the outer wall of the associated main flap (7) and, in the closed position, the said secondary flap (310) surmounts an internal downstream part (12) of the upstream fixed structure which is connected, during operation in direct jet mode, in continuity with the inner wall of the main flap (7).

10. Turbofan thrust reverser according to either of Claims 8 and 9, in which a mobile spoiler (23; 33) is added on the upstream side to the said secondary flap (210; 310) so as to increase its effectiveness during operation in reverse thrust mode.

11. Turbofan thrust reverser according to either of Claims 9 and 10, in which the said secondary flap (310) can be deployed keeping the main flap (7) in the closed position during certain phases of aircraft flight corresponding to the turbojet operating in direct jet mode.

12. Turbofan thrust reverser according to any one of Claims 1 to 11 in which the said secondary flap (10; 110; 210; 310) is deployed independently or otherwise of the main flap (7), according to the back-thrust stream from the turbojet, maintaining maximum efficiency of the scooping function of the said secondary flap during back-thrust phases.
